# EUROPÄISCHE PATENTSCHRIFT

(11) **EP 4 067 026 B1**
(45) Veröffentlichungstag und Bekanntmachung des Hinweises auf die Patenterteilung: **10.01.2024**
(21) Anmeldenummer: 22160636.1
(22) Anmeldetag: 08.03.2022
(51) Int. Cl.: B26D 1/06, B26D 7/00, F16G 5/08

(54) **VERFAHREN UND VORRICHTUNG ZUM SCHICHTWEISEN AUFBAU EINES MEHRSCHICHTIGEN ODER MEHRLAGIGEN POLYMERKÖRPERS**
METHOD AND DEVICE FOR LAYERED CONSTRUCTION OF A MULTILAYER POLYMER BODY
PROCÉDÉ ET APPAREIL DE CONSTRUCTION STRATIFIÉE D'UN CORPS POLYMÈRE MULTICOUCHE

(30) Priorität: 01.04.2021 DE 102021203339
(43) Veröffentlichungstag der Anmeldung: 05.10.2022
(73) Patentinhaber: ContiTech Antriebssysteme GmbH, 30165 Hannover (DE)
(72) Erfinder: Schulte, Hermann, 30165 Hannover (DE); Weber, Sven, 30165 Hannover (DE); Buchholz, Philipp, 30165 Hannover (DE); Dahlke, Andreas, 30165 Hannover (DE)
(74) Vertreter: Continental Corporation

(56) Entgegenhaltungen:
- WO-A1-2019/063143
- DE-A1-102013 105 333

## Beschreibung

Die Erfindung betrifft ein Verfahren zum schichtweisen Aufbau eines mehrschichtigen oder mehrlagigen Polymerkörpers gemäß dem Oberbegriff des Anspruchs 1.

Weiterhin betrifft die Erfindung eine Herstellungsvorrichtung zum Durchführen eines derartigen Verfahrens gemäß dem Oberbegriff des Anspruchs 7.

### Stand der Technik

Aus dem Stand der Technik sind diverse Verfahren und Vorrichtungen zur Herstellung von mehrschichtigen oder mehrlagigen Polymerkörpern bekannt. Diese mehrschichtigen oder mehrlagigen Polymerkörper können beispielsweise als Antriebsriemen, Förderbänder oder Luftfederbälge ausgebildet sein. All diesen Produkten gemein ist, dass sie einen polymeren Grundkörper aufweisen, welcher mindestens eine in sich eingebettete Festigkeitsträgerlage umfasst.

Die DE 10 2013 105 333 A1 offenbart ein Verfahren zur Herstellung eines Antriebsriemens, bei dem die einzelnen Komponenten, bestehend aus Mischungsplatten, Zugstrang und Textilbeschichtung, nacheinander auf eine rotierende Trommel aufgelegt werden.

In einigen Ausführungsformen ist der elastomere Grundkörper durch ein textiles Flächengebilde, beispielsweise ein Gewebe, welches mit weiteren Beschichtungen präpariert sein kann, gegen abrasiven Verschleiß oder den Einfluss von Medien geschützt. Diese Gewebelagen können je nach Anwendungsfall einen offenen Stoß aufweisen, bei dem sich die Enden beabstandet gegenüber liegen, oder über eine geschlossene Stoßnaht verfügen, bei der sich die Enden überlappen können. Im Falle einer geschlossenen Stoßnaht kann die Gewebelage als Gewebestrumpf vorkonfektioniert sein, welcher über den Elastomerkörper gestülpt wird. Die geschlossene Stoßnaht kann beispielsweise über ein Ultraschall-Schweißverfahren geschlossen sein.

Die Stoßnaht stellt, unabhängig davon, ob diese offen oder geschlossen ausgebildet ist, eine mechanische Schwachstelle dar und neigt unter dynamischer Belastung dazu, aufzureißen. Insbesondere bei Zahnriemen mit einem Gewebe auf dem der Zahnseite gegenüberliegenden Riemenrücken besteht die Herausforderung, Anrisse im Bereich der Stoßnaht in Folge dynamischer Beanspruchung zu vermeiden. Versuche zeigen, dass insbesondere bei Kälteprüfungen frühzeitige Risse am Riemenrücken im Bereich der Stoßnaht auftreten. Das Auftreten der Risse ist abhängig von der Positionierung der Stoßnaht auf dem Umfang des Zahnriemens.

### Aufgabe

Der Erfindung liegt daher die Aufgabe zugrunde, ein Verfahren sowie eine Vorrichtung bereitzustellen, so dass die Haltbarkeit der Stoßnaht, insbesondere bei dynamischen Belastungen, verbessert werden kann. Insbesondere soll die Stoßnaht eines Flächengebildes auf einem polymeren Grundkörper vorbestimmt sowie reproduzierbar positioniert werden können. Die Positionierung der Stoßnaht soll dabei vorzugsweise in einem Bereich erfolgen, der geringen mechanischen Spannungen unterliegt. Beispielsweise entspricht dies bei einem Zahnriemen dem Bereich über der Zahnmitte eines Riemenzahnes.

### Lösung der Aufgabe

Die Lösung dieser Aufgabe ergibt sich durch ein Verfahren mit den Merkmalen des Hauptanspruchs sowie durch eine Vorrichtung mit den Merkmalen des Anspruchs 7.

Weitere vorteilhafte Ausbildungen sind in den abhängigen Ansprüchen offenbart.

### Vorteile der Erfindung

Das in dem Anspruch 1 offenbarte erfindungsgemäße Verfahren zum schichtweisen Aufbau eines mehrschichtigen oder mehrlagigen Polymerkörpers ist vorzugsweise für die Herstellung eines Zahnriemens anzuwenden. Der Zahnriemen stellt allerdings nur eines von vielen Beispielen für mehrschichtige oder mehrlagige Polymerkörper dar und ist vor diesem Hintergrund nicht als einschränkendes Merkmal zu verstehen. Weitere Beispiele für mehrschichtige oder mehrlagige Polymerkörper können Luftfederbälge oder Transportbänder in sämtlichen Ausführungsformen sein.

Ein mehrschichtiger oder mehrlagiger Polymerkörper besteht im Wesentlichen aus einem elastomeren Basismaterial, welches einen in sich eingebetteten Festigkeitsträger, zum Beispiel in Form eines Zugstrangs, aufweist. Das polymere Basismaterial kann abhängig von den Anforderungen, zum Beispiel an Temperatur, Ozon- und bzw. oder Medienbeständigkeit, variieren und kann aus verschiedenen Polymeren, beispielsweise einem Elastomer, einem thermoplastischen Elastomer oder einer Mischung hiervon, ausgebildet sein. Der Festigkeitsträger umfasst zumeist steife und hochfeste Werkstoffe. So werden zum Beispiel für Zahnriemen insbesondere Glasfaser- oder Aramidzugstränge verwendet. Weiterhin sind Festigkeitsträger aus Polyester, Carbon oder Stahl bekannt. Zum Schutz des Polymers und den Festigkeitsträgern vor abrasivem Verschleiß oder dem Kontakt mit Medien, wie zum Beispiel Motoröl, sowie zur Verringerung des Reibbeiwertes, kann die Oberfläche des Polymerkörpers mit einem Flächengebilde beschichtet werden. In diesem Zusammenhang sei als Flächengebilde beispielsweise ein textiles Gewebe aufgeführt. Das textile Gewebe kann zur Verringerung des Reibbeiwertes und bzw. oder für eine öldichte Präparation mit einer weiteren Beschichtung versehen sein.

Die zuvor erwähnten Schichten oder Lagen werden in einem erfindungsgemäß vorteilhaften Verfahren zum schichtweisen Aufbau eines mehrschichtigen oder mehrlagigen Polymerkörpers, umfassend einen Festigkeitsträger, ein polymeres Basismaterial und mindestens ein Flächengebilde schicht- oder lagenweise auf ein zylindrisch geformtes Werkzeug aufgebracht. Eine Schneideinheit mit einer Schneidleiste und mit einem linear entlang der Schneidleiste verfahrbaren Messer erstreckt sich im Bereich eines äußeren Teilumfangs des Werkzeugs über die Breite des Werkzeugs in axialer Richtung. Das Verfahren umfasst dabei wenigstens nachfolgende Schritte:
- Rotieren des zylindrisch geformten Werkzeugs in Umfangsrichtung um eine konzentrische Achse,
- Auflegen des Festigkeitsträgers um das Werkzeug herum,
- Applizieren des polymeren Basismaterials unter Ausbildung einer Stoßstelle um das rotierende Werkzeug herum. Die beiden Materialenden können sich hierbei überlappen.
- Applizieren des Flächengebildes um das rotierende Werkzeug herum,
- Verfahren des Messers linear entlang der Schneidleiste, so dass das über die Schneidleiste geführte Flächengebilde unter Ausbildung einer Stoßstelle durchtrennt wird. Die Stoßstelle des Flächengebildes kann hierbei offen ausgeführt sein. Mit anderen Worten gesagt müssen sich bei der Ausbildung der Stoßstelle des Flächengebildes die Materialenden nicht berühren.

Die Schneideinheit befindet sich beim Verfahren des Messers mit einem Zentrierkeil formschlüssig mit mindestens einer Zahnvertiefung einer radial innenliegenden Verzahnung des Werkzeugs im Eingriff, sodass die Schneideinheit relativ zu dem Werkzeug definiert positioniert werden kann. Mit anderen Worten gesagt kann die Schneideinheit über den Zentrierkeil mit dem Werkzeug drehfest verbunden werden, wodurch eine definierte Positionierung und eine gleichzeitige Arretierung der Schneideinheit mit dem Werkzeug erfolgen kann. Hierdurch kann erfindungsgemäß erreicht werden, dass die Stoßstelle des Flächengebildes, welche aus dem Schritt des Schneidens resultiert, definiert und reproduzierbar gegenüber dem zylindrisch geformten Werkzeug positioniert ist. Hierdurch kann die Stoßstelle des Flächengebildes derart gegenüber dem herzustellenden Polymerkörper angeordnet werden, dass die Haltbarkeit der Stoßstelle des Flächengebildes erhöht werden kann. Bei einer Anwendung des erfindungsgemäßen Verfahrens auf die Herstellung eines Zahlriemens kann dies dazu verwendet werden, die Stoßstelle des Flächengebildes in den Bereich über der Zahnmitte eines Riemenzahnes zu positionieren. Dieser Bereich des Zahnriemens unterliegt, aufgrund der durch den Riemenzahn bedingten lokal höheren Steifigkeit, während des Umlaufens um die Riemenscheiben einer geringeren Biegebeanspruchung. Es ist daher besonders vorteilhaft, die Stoßstelle des Flächengebildes bei der beispielhaften Anwendung eines Zahnriemens in diesem Bereich zu positionieren, da die Stoßstelle so äußerst geringen mechanischen Spannungen ausgesetzt werden kann und eine längere Haltbarkeit erzielt werden kann.

Der mehrschichtige oder mehrlagige Polymerkörper wird wie zuvor erwähnt mit den einzelnen Komponenten schichtweise auf dem Werkzeug aufgebaut.

Ein erstes Flächengebilde kann zum Beispiel bereits als ein Gewebestrumpf passend zu dem Umfang des Werkzeugs vorgefertigt sein und in einem ersten Verfahrensschritt über das Werkzeug gestülpt werden. Das zylindrisch geformte Werkzeug kann zur Durchführung des nächsten Verfahrensschrittes in Umfangsrichtung um eine konzentrische Achse in Rotation versetzt werden, wobei zum Beispiel eine oder mehrere Lagen eines polymeren Materials um das Werkzeug herumgelegt werden können. Ein Festigkeitsträger kann zudem bei Rotation des Werkzeuges mit einem Vorschub quer zur Umfangsrichtung des Werkzeugs spiralförmig um das Werkzeug umspult werden.

In einem weiteren Verfahrensschritt kann das polymere Basismaterial unter Ausbildung einer Stoßstelle um das rotierende Werkzeug herumgelegt werden. Die Stoßstelle des polymeren Basismaterials ist bevorzugt derart ausgebildet, dass sich die Materialenden berühren oder überlappen, wodurch eine besonders beständige Haftung im Bereich der Stoßstelle erzeugt werden kann.

In einem weiteren Verfahrensschritt kann ein Flächengebilde um das rotierende Werkzeug auf das polymere Basismaterial herumgelegt werden. Das Flächengebilde kann von einer Materialrolle aus einem Speicher kommend zwischen Messer und Schneidleiste entlang und oberhalb eines Leitbleches auf das Werkzeug geführt werden. Eine Schneideinheit mit einer Schneidleiste erstreckt sich im Bereich eines äußeren Teilumfangs des Werkzeugs in dessen axialer Richtung über die Breite des Werkzeugs. Die Schneideinheit kann fest mit einem Maschinengestell verbunden sein und sich beabstandet zu dem Werkzeug in dessen axialer Richtung über die Breite des Werkzeuges erstrecken. Das Werkzeug kann zum Belegen mit dem Flächengebilde in Rotation versetzt werden. Die Rotation des Werkzeuges kann gestoppt werden, sobald die Soll-Position der Stoßnaht erreicht ist.

In einem weiteren Verfahrensschritt durchtrennt ein Messer als weiteres Element der Schneideinheit das über die Schneidleiste geführte Flächengebilde unter Ausbildung einer Stoßstelle, wobei das Messer linear entlang der Schneidleiste verfährt. Die Ausrichtung der Schneideinheit zum Werkzeug kann wie zuvor beschrieben derart erfolgen, dass die Schnittstelle durch den Rotationswinkel des Werkzeuges derart bestimmt wird, dass die Stoßstelle entweder offen oder geschlossen ausgebildet ist. Bei einer offenen Stoßstelle würden sich die Enden des Flächengebildes nicht berühren, während sich bei einer geschlossenen Stoßstelle die Enden des Flächengebildes zumindest berühren oder auch überlappen können. Die Wahl einer offenen oder geschlossenen Stoßstelle richtet sich nach den spezifischen Anforderungen an das Bauteil oder den gewährten Toleranzen während der Fertigung.

Als besonders vorteilhaft zeigt sich, dass sich die Schneideinheit beim Verfahren des Messers mit einem Zentrierkeil formschlüssig mit mindestens einer Zahnvertiefung einer radial innenliegenden Verzahnung des Werkzeugs im Eingriff befindet, sodass die Schneideinheit relativ zu dem Werkzeug positioniert werden kann. Mit anderen Worten gesagt kann die Schneideinheit über den Zentrierkeil mit dem Werkzeug drehfest verbunden werden, wodurch eine Positionierung und eine gleichzeitige Arretierung der Schneideinheit mit dem Werkzeug erfolgen kann.

Gemäß einem weiteren Aspekt des erfindungsgemäßen Verfahrens weist das Werkzeug mindestens an einem axialen Randbereich eine axiale Auskragung mit einer radial innenliegenden Verzahnung auf. Mit anderen Worten gesagt weist das Werkzeug zumindest in einem Randbereich einen Überstand auf, welcher einen Innendurchmesser bildet. Auf dem Umfang des Innendurchmessers ist eine radial nach innen zeigende Verzahnung angeordnet. In diese Verzahnung greift ein an der Schneidvorrichtung befindlicher Zentrierkeil, vorzugsweise nach radial außen gerichtet, ein, wodurch die Schneideinheit und das Werkzeug zueinander ausgerichtet formschlüssig fixiert werden können. Hierdurch kann die zuvor beschriebene Positionierung umgesetzt werden.

Gemäß einem weiteren Aspekt des erfindungsgemäßen Verfahrens weist das Werkzeug zumindest teilweise auf dessen Umfang ein Verzahnungsprofil eines Zahnriemens auf. Die Schneideinheit kann somit auf vorteilhafte Weise über einen Positionierstift in eine Zahnvertiefung des Verzahnungsprofils auf dem äußeren Umfang des Werkzeugs greifen, sodass die Schneideinheit mit dem Werkzeug gleichzeitig ausgerichtet und arretiert ist. Dieses Verzahnungsprofil kann gleichzeitig das sich auf dem Umfang des Werkzeuges befindliche Negativprofil des Zahnriemens sein. Durch den zusätzlichen Positionierstift kann auf vorteilhafte Weise sichergestellt werden, dass die Schneideinheit beidseitig auf dem Werkzeug geführt ist, wodurch ein Verkippen vermieden werden und eine präzise Positionierung der Schneideinheit zum Werkzeug und somit eine geringst mögliche Toleranz der Positionierung der Stoßnaht erfolgen kann. Die Positionierung der Stoßnaht kann hiermit auf vorteilhafte Weise in einen Bereich des Polymerkörpers mit besonders geringen mechanischen Spannungen und einer hohen Biegesteifigkeit gelegt werden. Im beispielhaften Fall eines Zahnriemens liegt dieser Bereich insbesondere über der Zahnmitte eines Riemenzahnes.

Gemäß einem weiteren Aspekt des erfindungsgemäßen Verfahrens ist das Flächengebilde als ein Gewebe aus Kett- und Schussfäden, vorzugsweise als gummiertes Gewebe, ausgebildet. Dies kann eine Möglichkeit darstellen, ein Flächengebilde wie zuvor beschrieben zu verwenden. Hierdurch kann insbesondere eine öldichte Gewebepräparation erfolgen.

Gemäß einem weiteren Aspekt des erfindungsgemäßen Verfahrens ist der mehrschichtige oder mehrlagige Polymerkörper ein Zahnriemen. Hierdurch können die zuvor beschriebenen Eigenschaften und Vorteile auf einen Zahnriemen als mehrschichtigen oder mehrlagigen Polymerkörper angewendet und dort genutzt werden.

Gemäß einem weiteren Aspekt des erfindungsgemäßen Verfahrens ist das Flächengebilde als Rückengewebe eines Zahnriemens ausgebildet. Dies kann eine Möglichkeit darstellen, ein Flächengebilde wie zuvor beschrieben auf einen Zahnriemen anzuwenden. Hierdurch wird auf besonders vorteilhafte Weise auch der Riemenrücken vor Verschleiß und Kontakt mit Medien geschützt.

Das zuvor beschriebene Verfahren kann durch eine erfindungsgemäße Herstellungsvorrichtung eines mehrschichtigen oder mehrlagigen Polymerkörpers durchgeführt werden. Die Herstellungsvorrichtung umfasst ein zylindrisch geformtes Werkzeug und eine Schneideinheit zum Schneiden eines Flächengebildes, wobei die Schneideinheit eine Schneidleiste und ein Messer aufweist. Die Schneidleiste ist ausgebildet, sich im Bereich eines äußeren Teilumfangs des Werkzeugs über die Breite des Werkzeugs in axialer Richtung zu erstrecken, wobei das Messer ausgebildet ist, linear entlang der Schneidleiste verfahren zu werden und das über die Schneidleiste geführte Flächengebilde zu durchtrennen.

Vorteilhafter Weise weist das Werkzeug eine radial innenliegende Verzahnung auf, wobei die Schneideinheit einen Zentrierkeil aufweist, welcher ausgebildet ist, sich beim Verfahren des Messers zur Positionierung der Schneideinheit relativ zu dem zylindrischen Werkzeug, formschlüssig in mindestens eine Zahnvertiefung der innenliegenden Verzahnung im Eingriff zu befinden.

Mit anderen Worten gesagt können durch die innenliegende Verzahnung des Werkzeugs und den Zentrierkeil der Schneideinheit das Werkzeug und die Schneideinheit zueinander ausgerichtet und in dieser Position arretiert werden. Über die Zahnteilung der innenliegenden Verzahnung des Werkzeugs kann hierbei Einfluss auf die Positioniergenauigkeit der Schneideinheit zu dem Werkzeug genommen werden. Das Flächengebilde kann über die Schneidleiste geführt werden, während das Flächengebilde um das Werkzeug herumgelegt wird. Sobald das Flächengebilde unter Ausbildung einer Stoßstelle um das Werkzeug herumgelegt worden ist, kann die Schneideinheit durch den Zentrierkeil in der gewünschten Position an dem Werkzeug positioniert und arretiert werden. Ein linear verfahrbares Schneidmesser als weiteres Element der Schneideinheit ist dazu ausgebildet, das über die Schneidleiste geführte Flächengebilde zu durchtrennen. Die Schneidleiste kann dem Flächengebilde auf besonders vorteilhafte Weise eine Unterlage bieten, die beim Schneiden des Flächengebildes eine Beschädigung des Messers oder der weiteren Schichten oder Lagen des Polymerkörpers verhindern kann.

Das Werkzeug weist vorteilhafter Weise an mindestens einem Randbereich in axialer Erstreckung eine Auskragung auf. Diese Auskragung weist eine radial innenliegende Verzahnung auf. Mit anderen Worten gesagt weist das Werkzeug zumindest in einem Randbereich einen Überstand auf, welcher einen Innendurchmesser bildet. Auf dem Umfang des Innendurchmessers ist eine Verzahnung angeordnet. Diese Verzahnung kann dazu dienen, mit dem Zentrierkeil der Schneideinheit im Eingriff zu stehen und das Werkzeug sowie die Schneideinheit relativ zueinander zu positionieren und zu arretieren.

Gemäß einem weiteren Aspekt der Erfindung weist das Werkzeug auf dem Umfang ein Verzahnungsprofil eines Zahnriemens auf, wobei die Teilung der radial innenliegenden Verzahnung mit der Teilung des Verzahnungsprofils korrespondiert. Die jeweiligen Zahnvertiefungen der innenliegenden Verzahnung und des Verzahnungsprofils können einander gegenüberliegend ausgebildet sein. Mit anderen Worten gesagt kann die Teilung der innenliegenden Verzahnung mit der Teilung des Verzahnungsprofils des Zahnriemens identisch ausgebildet sein, wodurch die Schneideinheit zu jedem einzelnen Zahn des Zahnriemens, welcher auf dem Werkzeug aufgebaut werden kann, identisch ausgerichtet werden kann. Hierbei können die jeweiligen Zahnvertiefungen der innenliegenden Verzahnung und des Verzahnungsprofils einander gegenüberliegend ausgebildet sein, wodurch die Schnitt-/ oder Stoßstelle des Flächengebildes in radialer Flucht zur Zahnmitte mindestens eines der Zähne des Zahnriemens angeordnet werden kann. So kann auf besonders vorteilhafte Art und Weise die Stoßstelle des Flächengebildes oder Gewebes in einen Bereich geringer dynamischer Belastung positioniert werden, der zum Beispiel bei einem Zahnriemen üblicher Weise in besonders biegesteifen Regionen liegt. Insbesondere ist dies oberhalb der Zahnmitte eines Riemenzahnes der Fall. Durch die exakte Positionierung der Stoßstelle des Gewebes kann ein frühzeitiges Anreißen vermieden werden.

Gemäß einem weiteren Aspekt der erfindungsgemäßen Herstellungsvorrichtung weist die Schneideinheit einen Positionierstift auf. Dieser Positionierstift ist zur weiteren Ausrichtung der Schneideinheit ausgebildet, in eine Zahnvertiefung des Verzahnungsprofils auf dem Außenumfang des Werkzeugs einzugreifen. Dieses Verzahnungsprofil kann gleichzeitig das sich auf dem Außenumfang des Werkzeuges befindliche Negativprofil eines Zahnriemens sein. Alternativ kann, zum Beispiel bei einem nicht profilierten Werkzeug zur Herstellung von Flachriemen, eine Hilfsverzahnung auf dem Außendurchmesser der axialen Auskragung des Werkzeugs vorgesehen sein, die dazu ausgebildet ist, mit dem Positionierstift der Schneideinheit in Eingriff zu stehen. Durch den zusätzlichen Positionierstift kann auf vorteilhafte Weise sichergestellt werden, dass die Schneideinheit beidseitig auf dem Werkzeug geführt werden kann, wodurch ein Verkippen vermieden und eine präzise Positionierung der Schneideinheit zum Werkzeug und somit eine geringst mögliche Toleranz der Positionierung der Stoßnaht auf dem Polymerkörper erfolgen kann.

Ein Zahnriemen besteht im Wesentlichen aus einem elastomeren Basismaterial, welches einen in sich eingebetteten Festigkeitsträger in Form eines Zugstrangs aufweist. Das elastomere Basismaterial kann abhängig von den Anforderungen, zum Beispiel an Temperatur, Ozon- und Medienbeständigkeit variieren und kann aus verschiedenen Polymeren, beispielsweise HNBR oder EPDM, ausgebildet sein. Der Zugstrang umfasst zumeist steife und hochfeste Werkstoffe. So werden insbesondere für Zahnriemen Glasfaser- oder Aramidzugstränge verwendet. Weiterhin sind Zugstänge aus Polyester, Carbon oder Stahl bekannt. Zum Schutz des Elastomers und den Zugsträngen vor abrasivem Verschleiß oder dem Kontakt mit Medien, wie zum Beispiel Motoröl, sowie zur Verringerung des Reibbeiwertes und der Minimierung von Laufgeräuschen, können sowohl die Zahn- als auch die gegenüberliegende Rückenseite des Zahnriemens mit einem Flächengebilde beschichtet werden. In diesem Zusammenhang sei als Flächengebildet beispielsweise ein textiles Gewebe aufgeführt. Das textile Gewebe kann zur Verringerung des Reibbeiwertes oder für einer Undurchlässigkeit für Öl mit einer weiteren Beschichtung präpariert sein.

Die zuvor beschriebenen Komponenten werden schichtweise auf ein zylindrisch geformtes Werkzeug aufgebracht, welches im Falle eines Zahnriemens auf dessen Umfang das Verzahnungsprofil des Zahnriemens aufweist. Der Zahnriemenrohling wird wie zuvor erwähnt mit den einzelnen Komponenten von der Zahnseite beginnend, schichtweise auf dem Werkzeug aufgebaut. Beispielsweise sei nachfolgend der Aufbau eines Zahnriemens mit einem Zahngewebe, einem Zugstrang, einem elastomeren Basismaterial und einem Rückengewebe beschrieben.

Das Zahngewebe kann hierbei bereits als Gewebestrumpf passend zu dem Umfang des Werkzeugs vorgefertigt sein und wird in einem ersten Verfahrensschritt über das Werkzeug gestülpt. Das zylindrisch geformte Werkzeug wird zur Durchführung des nächsten Verfahrensschrittes in Umfangsrichtung um eine konzentrische Achse in Rotation versetzt, wobei der Festigkeitsträger mit einem Vorschub quer zur Umfangsrichtung des Werkzeugs spiralförmig um das Werkzeug umspult wird. In einem weiteren Verfahrensschritt wird das elastomere Basismaterial unter Ausbildung einer sich überlappenden Stoßstelle um das rotierende Werkzeug herumgelegt, wobei in einem weiteren Verfahrensschritt das Flächengebilde um das rotierende Werkzeug herumgelegt wird. Eine Schneideinheit mit einer Schneidleiste erstreckt sich im Bereich eines äußeren Teilumfangs des Werkzeugs in dessen axialer Richtung über die gesamte Breite des Werkzeugs. In einem weiteren Verfahrensschritt durchtrennt ein Messer als weiteres Element der Schneideinheit das über die Schneidleiste geführte Flächengebilde unter Ausbildung einer offenen Stoßstelle, wobei das Messer linear entlang der Schneidleiste verfährt. Als besonders vorteilhaft zeigt sich, dass die Schneideinheit mit einem Zentrierkeil in eine radial innenliegende Verzahnung einer axialen Auskragung des Werkzeugs eingreift. Mit anderen Worten gesagt weist das Werkzeug zumindest in einem Randbereich einen Überstand auf, welcher einen Innendurchmesser bildet. Auf dem Umfang des Innendurchmessers ist eine Verzahnung angeordnet. In diese Verzahnung greift ein an der Schneidvorrichtung befindlicher Zentrierkeil ein, wodurch die Schneideinheit und das Werkzeug zueinander ausgerichtet werden können. Zusätzlich zu dem Zentrierkeil weist die Schneideinheit einen Positionierstift auf, welcher in eine Zahnvertiefung des Verzahnungsprofils auf dem äußeren Umfang des Werkzeugs eingreift. Dieses Verzahnungsprofil kann gleichzeitig das sich auf dem Umfang des Werkzeuges befindliche Negativprofil des Zahnriemens sein. Durch den zusätzlichen Positionierstift wird auf vorteilhafte Weise sichergestellt, dass die Schneideinheit beidseitig auf dem Werkzeug geführt ist, wodurch ein Verkippen vermieden wird und eine präzise Positionierung der Schneideinheit zum Werkzeug und somit eine geringst mögliche Toleranz der Positionierung der Stoßnaht auf dem Zahnriemen erfolgt. Die Positionierung der Stoßnaht kann hiermit auf vorteilhafte Weise in einen Bereich des Riemens mit besonders geringen mechanischen Spannungen und einer hohen Biegesteifigkeit gelegt werden. Dieser Bereich liegt insbesondere über der Zahnmitte eines Riemenzahnes.

### Erläuterung Figuren

Anhand der Zeichnung wird im Folgenden ein Ausführungsbeispiel der Erfindung näher erläutert.
Fig. 1 zeigt eine Aufbautrommel eines Zahnriemens.
Fig.2 zeigt eine axiale Auskragung mit Innenverzahnung der Aufbautrommel in vergrößerter Darstellung.
Fig. 3 zeigt die abschnittsweise Darstellung einer Schneideinheit und einer axialen Auskragung mit Innenverzahnung.
Fig. 4 zeigt die abschnittsweise Darstellung der Schneidleiste aus der unteren Ansicht.

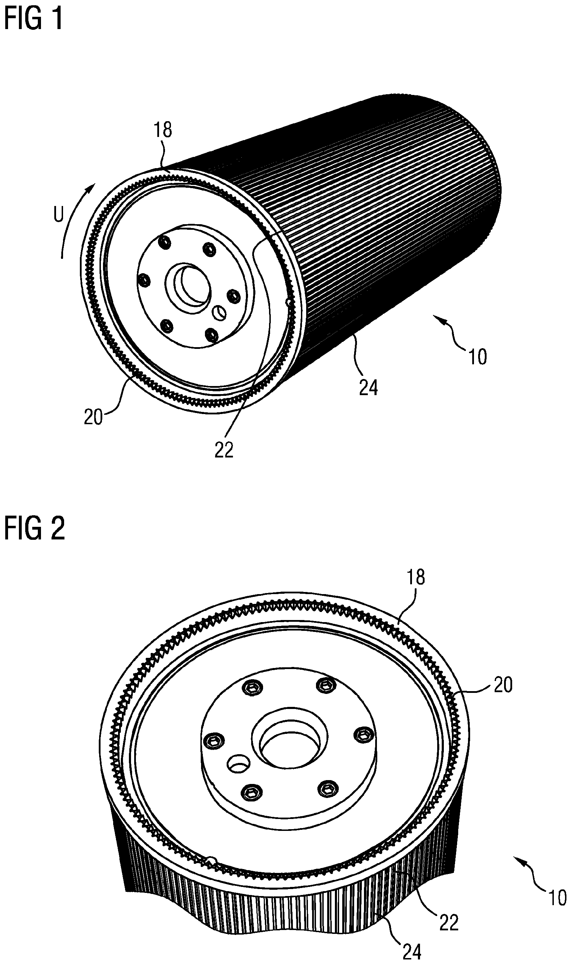

Fig. 1 zeigt eine Aufbautrommel in Form eines zylindrischen geformten Werkzeugs 10. Auf dem Außenumfang des Werkzeugs 10 befindet sich ein Verzahnungsprofil 24, dessen radiale Zahnerhöhungen (nicht bezeichnet) und radiale Zahnvertiefungen 22 sich in axialer Richtung, d.h. quer zur Umfangsrichtung U, erstrecken. Das Verzahnungsprofil 24 entspricht dem Negativprofil eines Zahnriemens, welcher schicht- oder lagenweise auf dem Werkzeug 10 aufgebaut wird. Das Werkzeug 10 weist einseitig im Randbereich eine sich in axialer Richtung des Werkzeuges 10 erstreckende Auskragung 18 auf. Die axiale Auskragung 18 weist eine derartige Wandstärke auf, sodass sich im Bereich der Auskragung 18 ein Innen- und eine Außendurchmesser bildet. Der Innendurchmesser der Auskragung 18 weist eine radial innenliegende Verzahnung 20 auf. Fig. 2 zeigt die beschriebene Ausführungsform des Werkzeugs 10 in einer vergrößerten Darstellung, wo insbesondere die axiale Auskragung 18 vergrößert dargestellt ist.

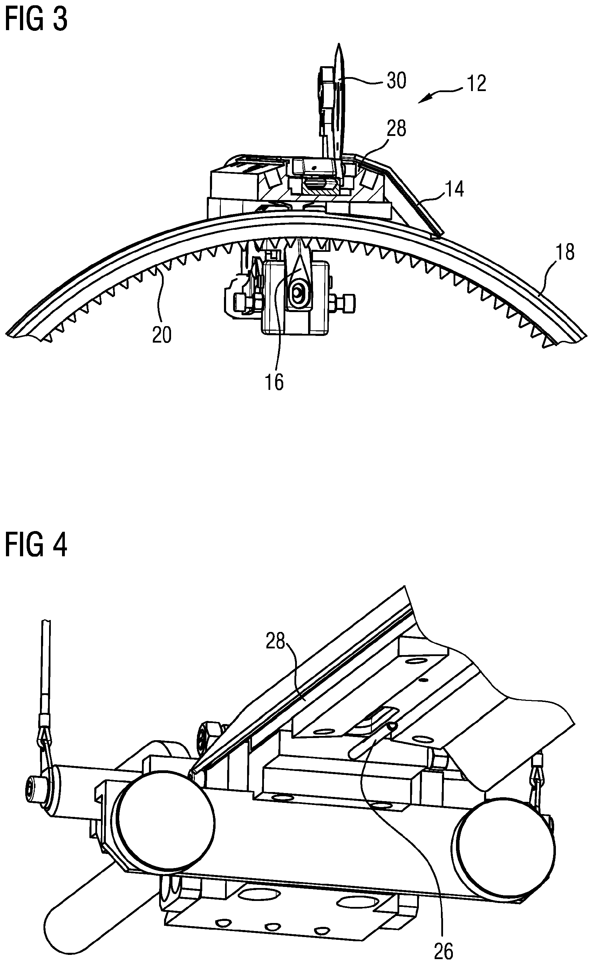

Fig. 3 zeigt die abschnittsweise Darstellung der Schneideinheit 12 und der axialen Auskragung 18 mit Innenverzahnung 20. Die Schneidleiste 12 umfasst einen Zentrierkeil 16, ein Messer 30, ein Leitblech 14 zur Führung des Flächengebildes sowie eine Schneidleiste 28. Nicht dargestellt ist das Flächengebilde, welches beim Herumlegen um das Werkzeug 10 von einer Materialrolle aus einem Speicher kommend, zwischen Messer 30 und Schneidleiste 28 entlang, oberhalb des Leitbleches 14 auf das Werkzeug 10 geführt wird.

Die Schneideinheit 12 ist fest mit einem Maschinengestell (nicht dargestellt) verbunden und erstreckt sich radial beabstandet zu dem Werkzeug 10 in dessen axialer Richtung über die gesamte Breite des Werkzeuges 10. Das Werkzeug 10 wird zum Belegen mit dem Flächengebilde in Rotation versetzt. Die Rotation des Werkzeuges (10) wird gestoppt, sobald die Soll-Position einer Stoßnaht erreicht ist. Zur Positionierung und Arretierung der Schneideinheit 12 zu dem Werkzeug 10 greift ein Zentrierkeil 16 radial nach außen in die radial innenliegende Verzahnung 20 der axialen Auskragung 18 ein. Die Schnittlinie, entlang der das Messer 30 linear verfährt und das Flächengebilde abtrennt, ist somit definiert und reproduzierbar bestimmt. Das Messer 30 wird durch einen Linearaktuator (nicht dargestellt) längs entlang der Schneidleiste 28 bewegt und durchtrennt das Flächengebilde unter Verbleib einer Stoßstelle zu dem anderen Ende des Flächengebildes.

Fig. 4 zeigt die abschnittsweise Darstellung der Schneidleiste 28 aus der unteren Ansicht. Dargestellt ist ein Positionierstift 26, welcher zusätzlich zu dem Zentrierkeil 16 mit dem Werkzeug 10 auf dessen Außendurchmesser in formschlüssigem Kontakt steht, wenn das Flächengebilde durchtrennt wird. Der Positionierstift greift hierbei nach Erreichen der Soll-Position des Werkzeugs 10, welche die spätere Position der Stoßnaht des Flächengebildes definiert, in eine Zahnvertiefung 22 der Verzahnung 24 ein. Durch die beidseitige Arretierung der Schneideinheit 12, sowohl über den Zentrierkeil 16 als auch über den Positionierstift 26, mit dem Werkzeug 10 wird eine hohe Positioniergenauigkeit der Stoßstelle des Flächengebildes sichergestellt.

### Bezugszeichenliste

- 10: Werkzeug
- 12: Schneideinheit
- 14: Leitblech
- 16: Zentrierkeil
- 18: axiale Auskragung
- 20: innenliegende Verzahnung
- 22: Zahnvertiefung
- 24: Verzahnungsprofil
- 26: Positionierstift
- 28: Schneidleiste
- 30: Messer

- U: Umfangsrichtung

## Patentansprüche

1. Verfahren zum schichtweisen Aufbau eines mehrschichtigen oder mehrlagigen Polymerkörpers, umfassend einen Festigkeitsträger, ein polymeres Basismaterial und mindestens ein Flächengebilde,
wobei die Komponenten schichtweise auf ein zylindrisch geformtes Werkzeug (10) aufgebracht werden,
wobei sich eine Schneideinheit (12) mit einer Schneidleiste (28) und mit einem linear entlang der Schneidleiste (28) verfahrbaren Messer (30) im Bereich eines äußeren Teilumfangs des Werkzeugs (10) über die Breite des Werkzeugs (10) in axialer Richtung erstreckt,
wobei das Verfahren wenigstens nachfolgende Schritte umfasst:
- Rotieren des zylindrisch geformten Werkzeugs (10) in Umfangsrichtung (U) um eine konzentrische Achse,
- Auflegen des Festigkeitsträgers um das Werkzeug (10) herum,
- Applizieren des polymeren Basismaterials unter Ausbildung einer Stoßstelle um das rotierende Werkzeug (10) herum,
- Applizieren des Flächengebildes um das rotierende Werkzeug (10) herum,
- Verfahren des Messers (30) linear entlang der Schneidleiste (28), so dass das über die Schneidleiste (28) geführte Flächengebilde unter Ausbildung einer Stoßstelle (14) durchtrennt wird,
**dadurch gekennzeichnet, dass**
sich die Schneideinheit (12) beim Verfahren des Messers (30) mit einem Zentrierkeil (16) formschlüssig mit mindestens einer Zahnvertiefung (22) einer radial innenliegenden Verzahnung (20) des Werkzeugs (10) im Eingriff befindet, sodass die Schneideinheit (12) relativ zu dem Werkzeug (10) positioniert wird.

2. Verfahren nach Anspruch 1,
**dadurch gekennzeichnet, dass**
das Werkzeug (10) mindestens an einem axialen Randbereich eine axiale Auskragung (18) mit einer radial innenliegenden Verzahnung (20) aufweist.

3. Verfahren nach einem der vorhergehenden Ansprüche,
**dadurch gekennzeichnet, dass**
das Werkzeug (10) zumindest teilweise auf dessen Umfang (U) ein Verzahnungsprofil (24) eines Zahnriemens aufweist und die Schneideinheit (12) mit einen Positionierstift (26) in eine Zahnvertiefung (22) des Verzahnungsprofils (24) greift, sodass die Schneideinheit (12) mit dem Werkzeug (10) ausgerichtet ist.

4. Verfahren nach einem der vorhergehenden Ansprüche,
**dadurch gekennzeichnet, dass**
das Flächengebilde als ein Gewebe, vorzugsweise als gummiertes Gewebe, ausgebildet ist.

5. Verfahren nach einem der vorhergehenden Ansprüche,
**dadurch gekennzeichnet, dass**
der mehrschichtige oder mehrlagige Polymerkörper ein Zahnriemen ist.

6. Verfahren nach einem der vorhergehenden Ansprüche,
**dadurch gekennzeichnet, dass**
das Flächengebilde als Rückengewebe eines Zahnriemens ausgebildet ist.

7. Herstellungsvorrichtung eines mehrschichtigen oder mehrlagigen Polymerkörpers, geeignet zur Durchführung des Verfahrens nach einem der Ansprüche 1 bis 5, umfassend
ein zylindrisch geformtes Werkzeug (10)
und eine Schneideinheit (12) zum Schneiden eines Flächengebildes, wobei die Schneideinheit (12) eine Schneidleiste (28) und ein Messer (30) aufweist,
wobei die Schneidleiste (28) ausgebildet ist, sich im Bereich eines äußeren Teilumfangs des Werkzeugs (10) über die Breite des Werkzeugs (10) in axialer Richtung zu erstrecken,
wobei das Messer (30) ausgebildet ist, linear entlang der Schneidleiste (28) verfahren zu werden und das über die Schneidleiste (28) geführte Flächengebilde zu durchtrennen,
**dadurch gekennzeichnet, dass**
das Werkzeug (10) eine radial innenliegende Verzahnung (20) aufweist, wobei die Schneideinheit (12) einen Zentrierkeil (16) aufweist, welcher ausgebildet ist, sich beim Verfahren des Messers (30) zur Positionierung der Schneideinheit (12) relativ zu dem zylindrischen Werkzeug (10), formschlüssig in mindestens eine Zahnvertiefung (22) der innenliegenden Verzahnung (20) im Eingriff zu befinden.

8. Herstellungsvorrichtung eines mehrschichtigen oder mehrlagigen Polymerkörpers nach Anspruch 7,
**dadurch gekennzeichnet, dass**
das Werkzeug (10) mindestens an einem axialen Randbereich eine axiale Auskragung (18) mit einer radial innenliegenden Verzahnung (20) aufweist.

9. Herstellungsvorrichtung eines mehrschichtigen oder mehrlagigen Polymerkörpers nach einem der Ansprüche 7 oder 8,
**dadurch gekennzeichnet, dass**
das Werkzeug (10) auf dem Umfang (U) ein Verzahnungsprofil (24) eines Zahnriemens aufweist, wobei die Teilung der radial innenliegenden Verzahnung (20) mit der Teilung des Verzahnungsprofils (24) korrespondiert, wobei die jeweiligen Zahnvertiefungen (22) der innenliegenden Verzahnung (20) und des Verzahnungsprofils (24) einander gegenüberliegend ausgebildet sind.

10. Herstellungsvorrichtung eines mehrschichtigen oder mehrlagigen Polymerkörpers nach einem der Ansprüche 7 bis 9,
**dadurch gekennzeichnet, dass**
die Schneideinheit (12) einen Positionierstift (26) aufweist, der zur weiteren Ausrichtung der Schneideinheit (12) mit dem Werkzeug (10) ausgebildet ist, in eine Zahnvertiefung (22) des Verzahnungsprofils (24) zu greifen.

## Claims

1. Method for the layer-by-layer construction of a multi-layer or multi-ply polymer body, comprising a strength member, a polymeric base material and at least one sheet material,
wherein the components are applied layer by layer to a cylindrically shaped tool (10),
wherein a cutting unit (12) having a cutting bar (28) and having a blade (30) which is linearly movable along the cutting bar (28) extends in an axial direction over the width of the tool (10) in the region of an outer partial circumference of the tool (10), wherein the method comprises at least the following steps:
- rotating the cylindrically shaped tool (10) in a circumferential direction (U) about a concentric axis,
- placing the strength member around the tool (10),
- applying the polymeric base material around the rotating tool (10) so as to form a joint,
- applying the sheet material around the rotating tool (10),
- moving the blade (30) linearly along the cutting bar (28), such that the sheet material guided over the cutting bar (28) is severed so as to form a joint (14),
**characterized in that**,
during the movement of the blade (30), the cutting unit (12) is located with a centring wedge (16) in positively locking engagement with at least one tooth recess (22) of a radially internally situated toothing (20) of the tool (10), such that the cutting unit (12) is positioned relative to the tool (10).

2. Method according to Claim 1,
**characterized in that**
the tool (10) has, at least in an axial edge region, an axial projection (18) with a radially internally situated toothing (20).

3. Method according to either of the preceding claims,
**characterized in that**
the tool (10) has a toothing profile (24) of a toothed belt at least partially around its circumference (U) and the cutting unit (12) engages with a positioning pin (26) into a tooth recess (22) of the toothing profile (24), such that the cutting unit (12) is aligned with the tool (10).

4. Method according to one of the preceding claims,
**characterized in that**
the sheet material is in the form of a woven fabric, preferably in the form of a rubberized woven fabric.

5. Method according to one of the preceding claims,
**characterized in that**
the multi-layer or multi-ply polymer body is a toothed belt.

6. Method according to one of the preceding claims,
**characterized in that**
the sheet material is in the form of a woven backing fabric of a toothed belt.

7. Production apparatus for a multi-layer or multi-ply polymer body, suitable for carrying out the method according to one of Claims 1 to 5, comprising
a cylindrically shaped tool (10)
and a cutting unit (12) for cutting a sheet material,
wherein the cutting unit (12) has a cutting bar (28) and a blade (30),
wherein the cutting bar (28) is configured to extend in the axial direction over the width of the tool (10) in the region of an outer partial circumference of the tool (10), wherein the blade (30) is configured to be moved linearly along the cutting bar (28) and to sever the sheet material guided over the cutting bar (28),
**characterized in that**
the tool (10) has a radially internally situated toothing (20), wherein the cutting unit (12) has a centring wedge (16) which is configured to be located, during the movement of the blade (30) for positioning of the cutting unit (12) relative to the cylindrical tool (10), in positively locking engagement in at least one tooth recess (22) of the internally situated toothing (20).

8. Production apparatus for a multi-layer or multi-ply polymer body according to Claim 7,
**characterized in that**
the tool (10) has, at least in an axial edge region, an axial projection (18) with a radially internally situated toothing (20).

9. Production apparatus for a multi-layer or multi-ply polymer body according to either of Claims 7 and 8,
**characterized in that**
the tool (10) has a toothing profile (24) of a toothed belt on the circumference (U), wherein the pitch of the radially internally situated toothing (20) corresponds to the pitch of the toothing profile (24), wherein the respective tooth recesses (22) of the internally situated toothing (20) and of the toothing profile (24) are configured to lie opposite one another.

10. Production apparatus for a multi-layer or multi-ply polymer body according to one of Claims 7 to 9,
**characterized in that**
the cutting unit (12) has a positioning pin (26) which, for the further alignment of the cutting unit (12) with the tool (10), is configured to engage into a tooth recess (22) of the toothing profile (24).

## Revendications

1. Procédé de construction par couches d'un corps polymère multicouche ou multistrate, comprenant un support de résistance, un matériau de base polymère et au moins une structure plate,
les composants étant appliqués par couches sur un outil de forme cylindrique (10), une unité de coupe (12) avec une barre de coupe (28) et avec une lame (30) déplaçable linéairement le long de la barre de coupe (28) s'étendant dans la direction axiale sur la largeur de l'outil (10) dans la zone d'une circonférence partielle extérieure de l'outil (10),
le procédé comprenant au moins les étapes suivantes :
- la mise en rotation de l'outil de forme cylindrique (10) dans la direction circonférentielle (U) autour d'un axe concentrique,
- la mise en place du support de résistance autour de l'outil (10),
- l'application du matériau de base polymère en réalisant un point de joint autour de l'outil (10) en rotation,
- l'application de la structure plate autour de l'outil (10) en rotation,
- le déplacement de la lame (30) linéairement le long de la barre de coupe (28), de telle sorte que la structure plate guidée sur la barre de coupe (28) est sectionnée en réalisant un point de joint (14),
**caractérisé en ce que**
l'unité de coupe (12), lors du déplacement de la lame (30), se trouve en prise par complémentarité de forme par une clavette de centrage (16) avec au moins un creux de dent (22) d'une denture radialement intérieure (20) de l'outil (10), de telle sorte que l'unité de coupe (12) est positionnée par rapport à l'outil (10).

2. Procédé selon la revendication 1,
**caractérisé en ce que**
l'outil (10) présente au moins au niveau d'une zone de bord axiale une saillie axiale (18) avec une denture radialement intérieure (20).

3. Procédé selon l'une quelconque des revendications précédentes,
**caractérisé en ce que**
l'outil (10) présente au moins partiellement sur sa circonférence (U) un profil de denture (24) d'une courroie dentée et l'unité de coupe (12) s'engage par une tige de positionnement (26) dans un creux de dent (22) du profil de denture (24), de telle sorte que l'unité de coupe (12) est alignée avec l'outil (10).

4. Procédé selon l'une quelconque des revendications précédentes,
**caractérisé en ce que**
la structure plate est réalisée sous la forme d'un tissu, de préférence sous forme de tissu caoutchouté.

5. Procédé selon l'une quelconque des revendications précédentes,
**caractérisé en ce que**
le polymère multicouche ou multistrate est une courroie dentée.

6. Procédé selon l'une quelconque des revendications précédentes,
**caractérisé en ce que**
la structure plate est réalisée sous forme de tissu dorsal d'une courroie dentée.

7. Dispositif de fabrication d'un corps polymère multicouche ou multistrate, approprié pour la mise en oeuvre du procédé selon l'une quelconque des revendications 1 à 5, comprenant
un outil de forme cylindrique (10)
et une unité de coupe (12) pour couper une structure plate,
l'unité de coupe (12) présentant une barre de coupe (28) et une lame (30),
la barre de coupe (28) étant réalisée pour s'étendre dans la direction axiale sur la largeur de l'outil (10) dans la zone d'une circonférence partielle extérieure de l'outil (10),
la lame (30) étant réalisée pour être déplacée linéairement le long de la barre de coupe (28) et pour sectionner la structure plate guidée sur la barre de coupe (28), **caractérisé en ce que**
l'outil (10) présente une denture radialement intérieure (20),
l'unité de coupe (12) présentant une clavette de centrage (16) qui est réalisée pour, lors du déplacement de la lame (30), pour le positionnement de l'unité de coupe (12) par rapport à l'outil cylindrique (10), se trouver en prise par complémentarité de forme dans au moins un creux de dent (22) de la denture intérieure (20).

8. Dispositif de fabrication d'un corps polymère multicouche ou multistrate selon la revendication 7,
**caractérisé en ce que**
l'outil (10) présente, au moins au niveau d'une zone de bord axiale, une saillie axiale (18) avec une denture radialement intérieure (20).

9. Dispositif de fabrication d'un corps polymère multicouche ou multistrate selon l'une quelconque des revendications 7 ou 8,
**caractérisé en ce que**
l'outil (10) présente sur la circonférence (U) un profil de denture (24) d'une courroie dentée, le pas de la denture radialement intérieure (20) correspondant au pas du profil de denture (24), les creux de dent (22) respectifs de la denture intérieure (20) et du profil de denture (24) étant réalisés en opposition les uns par rapport aux autres.

10. Dispositif de fabrication d'un corps polymère multicouche ou multistrate selon l'une quelconque des revendications 7 à 9,
**caractérisé en ce que**
l'unité de coupe (12) présente une tige de positionnement (26) qui, pour l'alignement supplémentaire de l'unité de coupe (12) avec l'outil (10), est réalisée pour s'engager dans un creux de dent (22) du profil de denture (24).
